# FASCICULE DE BREVET EUROPEEN

(11) **EP 0 786 375 B1**
(45) Date de publication et mention de la délivrance du brevet: **12.04.2000**
(21) Numéro de dépôt: 97400116.6
(22) Date de dépôt: 21.01.1997
(51) Int. Cl.: B60P 7/08

(54) **Dispositif d'enroulement à commande manuelle d'un élément enroulable sur un arbre ou tambour**
Handbetriebene Vorrichtung zum Wickeln von Wickelgut auf einer Welle oder einer Trommel
Manually operated device for winding an element about a shaft or a drum

(30) Priorité: 29.01.1996 FR 9600981
(43) Date de publication de la demande: 30.07.1997
(73) Titulaire: Thiriet Fils Société Anonyme, 08000 Warcq (FR)
(72) Inventeur: Thiriet, Philippe A., 08000 Warcq (FR); Fege, Franqois, 08400 Vouziers (FR)
(74) Mandataire: Le Bras, Hervé

(56) Documents cités:
- FR-A- 2 703 037
- US-A- 5 101 537
- US-A- 5 129 698

## Description

La présente invention est relative à un dispositif d'enroulement, à commande manuelle, d'un élément enroulable, tel que par exemple, câble, film, nappe, toile ou bâche, autour d'un arbre ou tambour.

Elle trouvera son application dans de nombreux domaines, où il est nécessaire, pour des raisons diverses, de procéder à l'enroulement d'un élément, au maintien de l'enroulement sous tension et à la détente de cet élément.

Par exemple, dans le domaine du transport il est connu des caisses de camions ou remorques, utilisées pour le transport de marchandises et équipées sur leurs faces latérales de bâches pour protéger ces marchandises.

Pour faciliter le chargement et le déchargement du véhicule, il est courant de rendre les bâches amovibles.

La bâche est suspendue à un rail par des chariots, est fixée à un angle de la caisse du véhicule et comporte à l'autre extrémité un moyen d'accrochage sur un tambour, monté rotatif sur la caisse. La rotation du tambour dans un sens permet de tendre la bâche, et la rotation dans l'autre sens permet de détendre la bâche, afin de pouvoir la décrocher du tambour.

La présente invention concerne plus précisément le dispositif qui actionne ce tambour.

FR-A-2 703 037 concerne un tel dispositif qui comporte une tige pour entraîner le tambour, une roue dentée solidaire de la tige et dont les dents coopèrent avec un premier cliquet autorisant la rotation de la roue dans un sens et l'immobilisant en rotation dans l'autre sens et avec un deuxième cliquet monté sur une poignée oscillante qui entraîne la roue en rotation dans le premier sens. Dans ce dispositif le premier cliquet fait partie d'un basculeur à deux cliquets, ce qui permet d'inverser le sens de rotation autorisé de la roue pour détendre la bâche, et le deuxième cliquet est également réversible, afin de permettre l'inversion du sens d'enroulement de la bâche.

L'inconvénient de ce dispositif est son prix de revient élevé, notamment du fait que l'on utilise une roue dentée, dont les dents sont réalisées par usinage.

Le but de la présente invention est de proposer un dispositif d'enroulement à commande manuelle qui soit robuste et fiable et qui soit d'un coût de revient faible.

L'invention atteint son but notamment par le fait que la roue d'entraînement de la tige peut être réalisée par forgeage.

La présente invention concerne un dispositif d'enroulement, à commande manuelle, d'un élément enroulable, tel que par exemple câble, film, nappe, toile ou bâche, autour d'un arbre ou tambour, ledit dispositif comprenant :
une chape de montage,
une tige montée à rotation dans ladite chape et assujettie directement ou indirectement audit arbre ou tambour,
une roue fixée coaxialement sur ladite tige,
une poignée de manoeuvre montée oscillante sur ladite tige,
des premiers moyens d'encliquetage destinés à autoriser la rotation de la roue dans un premier sens et à la bloquer en rotation dans l'autre sens,
des seconds moyens d'encliquetage, interposés entre la poignée et la roue, permettant le blocage de la poignée par rapport à la roue, lorsqu'on fait pivoter la poignée dans ledit premier sens et permettant le pivotement libre de la poignée dans l'autre sens, la roue étant alors immobilisée en rotation par les premiers moyens d'encliquetage.

Selon la présente invention, ce dispositif est caractérisé par le fait que
a) les premiers moyens d'encliquetage comportent des premiers crans formés sur l'une des faces d'extrémité de la roue, et
b) les deuxièmes moyens d'encliquetage comportent des deuxièmes crans formés sur l'autre face d'extrémité de la roue.

Avantageusement, les premiers crans et les deuxièmes crans se présentent sous la forme de dentures radiales présentant chacune un premier flan sensiblement parallèle à l'axe de rotation de la roue et un deuxième flan incliné.

De préférence, les premiers crans et les deuxièmes crans sont disposés symétriquement par rapport au plan médian perpendiculaire à l'axe de rotation, afin de permettre la réversibilité du sens de rotation autorisé de la tige par renversement du sens de montage de la roue sur la tige selon que le dispositif est prévu pour être monté à droite ou à gauche du véhicule.

Les avantageuses dispositions suivantes sont en outre adoptées :
- les premiers moyens d'encliquetage comportent outre au moins un troisième cran destiné à coopérer avec les premiers crans et formé sur une face d'une pièce montée coulissante sur la tige et immobilisée en rotation par rapport à la chape, des premiers moyens élastiques étant interposés entre la chape et ladite pièce, afin de maintenir ladite pièce en appui sur la face d'extrémité correspondante de la roue ;
- ladite pièce comporte un levier permettant de déverrouiller manuellement les premiers moyens d'encliquetage en exerçant sur ledit levier une force opposée à la force des premiers moyens élastiques ;
- les deuxièmes moyens d'encliquetage comportent en outre au moins un quatrième cran destiné à coopérer avec les deuxièmes crans et formé sur une face d'un flasque de montage de la poignée sur la tige, ledit flasque étant monté coulissant sur la tige, des deuxièmes moyens élastiques étant interposés entre la chape et ledit flasque, afin de maintenir ledit flasque en appui sur la face d'extrémité correspondante de la roue ;
- la poignée de manoeuvre est articulée sur le flasque de montage, de telle manière qu'elle puisse prendre une position rabattue sensiblement parallèle à la tige et il est prévu des moyens pour immobiliser la poignée en position rabattue ;
- les moyens d'immobilisation de la poignée en position rabattue comportent une encoche de réception de poignée formée dans la chape et une plaque de blocage montée pivotante sur la tige et comportant un crochet susceptible de coopérer avec l'encoche pour bloquer la poignée dans ladite encoche ;
- la plaque de blocage et la chape comportent des trous prévus en regard l'un de l'autre, lorsque ladite plaque est dans la position de blocage de la poignée, lesdits trous étant susceptibles de recevoir un élément de verrouillage dudit dispositif tel qu'un crochet de cadenas ;
- la poignée de manoeuvre se rabat du côté du pignon et comporte une patte permettant de verrouiller les premiers moyens d'encliquetage, lorsque la poignée est en position rabattue.

D'autres avantages et caractéristiques de l'invention ressortiront à la lecture de la description suivante faite à titre d'exemple et en référence aux dessins annexés dans lesquels :
La figure 1 est une coupe partielle, selon un plan passant par l'axe de rotation, du dispositif d'enroulement selon la présente invention ;
la figure 2 est une vue de face du dispositif de la figure 1;

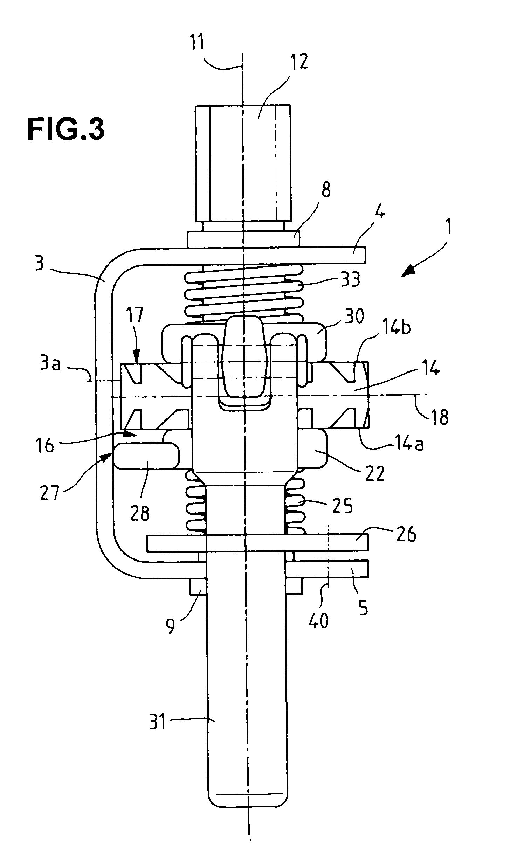

la figure 3 est une vue de gauche du dispositif selon l'invention, et
la figure 4 est une vue de dessus du même dispositif;

Le dispositif d'enroulement 1 montré sur les dessins comporte une chape de montage 2 en U dont l'âme centrale 3 présente deux trous 3a pour la fixation du dispositif 1 sur une caisse de véhicule par exemple, et dont les ailes supérieure 4 et inférieure 5 présentent chacune un alésage, respectivement 6 et 7, pour le montage de coussinets 8 et 9. Les coussinets 8 et 9 ont des axes confondus. Une tige cylindrique 10, ou un arbre, d'axe 11, est monté à rotation dans les coussinets 8 et 9. La tige 10 présente au-dessus de l'aile supérieure 4, une tête 12 polygonale destinée à coopérer avec un logement frontal d'un tambour ou arbre monté rotatif sur la caisse du véhicule au dessus du dispositif d'enroulement 1 et sur lequel s'enroule un élément enroulable, un bâche par exemple, par suite de la rotation de la tige 10.

Une roue 14 est fixée coaxialement à la tige 10 et sur cette dernière au moyen d'une goupille 15.

La roue 14 est disposée sensiblement à mi-distance des ailes 4 et 5 de la chape 2. Elle présente sur sa face inférieure 14a des premiers crans 16 radiaux répartis régulièrement autour de l'axe de rotation 11 et sur sa face supérieure 14b des deuxièmes crans 17 radiaux répartis également régulièrement autour de l'axe 11. Les deux faces d'extrémité 14a et 14b de la roue 14 présentent des surfaces sensiblement symétriques par rapport au plan médian 18 de la roue 14, plan perpendiculaire à l'axe de rotation 11. Chaque cran se présente sous la forme d'une denture radiale qui présente un premier flan 19 dont la surface est située dans un plan sensiblement parallèle à l'axe 11 et un deuxième flan 20 à surface oblique.

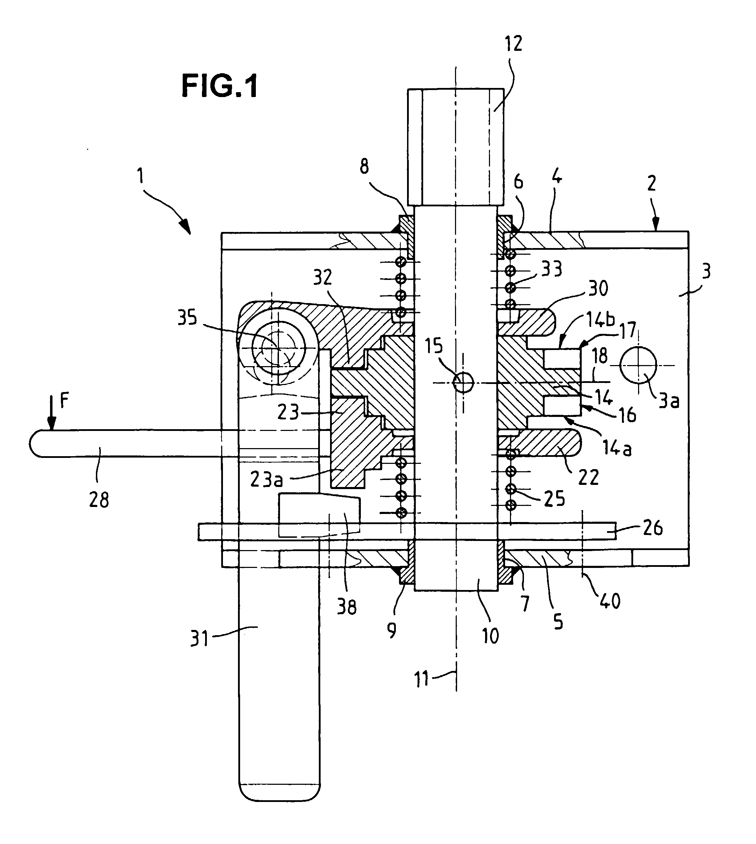

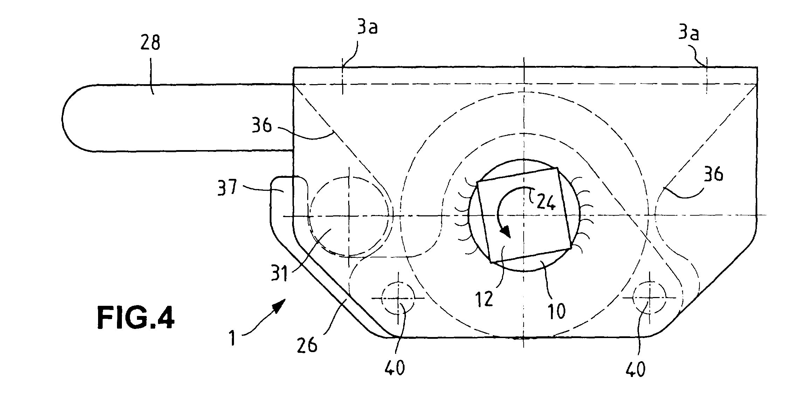

Au-dessous de la roue 14 et entre cette dernière et l'aile inférieure 5 de la chape 2 est montée, coulissante sur la tige 10 et immobilisée en rotation par rapport à la chape 2, une pièce 22 qui présente sur sa face supérieure au moins un troisième cran 23 destiné à coopérer avec les premiers crans 16 pour permettre la rotation de la roue 14 dans un premier sens, représenté par la flèche 24 sur la figure 4, et empêcher la rotation de la roue 14 dans le sens inverse. La pièce 22 est maintenue en appui contre la face inférieure de la roue 14 au moyen d'un ressort à boudin 25 interposé entre la face inférieure de la pièce 22 et la face supérieure d'une plaque de blocage 26 montée pivotante autour de la tige 10 au-dessus du coussinet 9 et dont l'utilité sera expliquée plus loin dans le présent mémoire. La pièce 22 comporte essentiellement un alésage central pour le passage de la tige 10 et des surfaces périphériques 27 en appui sur l'âme centrale 3 de la chape 2 et empêchant le pivotement de la pièce 22 autour de la tige 10. Elle comporte également un levier 28 qui s'étend parallèlement à l'âme centrale 3 vers l'extérieur du dispositif, du côté du troisième cran 23 par rapport à la tige 10. En exerçant manuellement sur l'extrémité du levier 28 une force F dirigée vers le bas à l'encontre de la force du ressort 25, ce dernier s'affaisse, et le troisième cran 23 peut être écarté des premiers crans 16. Les premiers crans 16 et le troisième cran 23 constituent les premiers moyens d'encliquetage du dispositif 10, et le levier 28 permet de déverrouiller manuellement les premiers moyens d'encliquetage. Comme on le voit plus clairement sur la figure 1, la pièce 22 est symétrique par rapport à son plan médian, et elle comporte également, sur l'autre face, des troisièmes crans 23a. On conçoit ainsi qu'en inversant le sens de montage de la pièce 22 et de la roue 14 sur la tige 10, cette dernière sera autorisée à tourner dans le sens inverse de la flèche 24 et sera immobilisée dans le sens de la flèche 24.

Au-dessus de la roue 14 est montée, coulissant sur la tige et pivotable autour de cette dernière, un flasque de montage 30 sur lequel est articulée une poignée de manoeuvre 31. Le flasque de montage 30 présente sur sa face inférieure au moins un quatrième cran 32 destiné à coopérer avec les deuxièmes crans 17 pour permettre la rotation de la roue 14 dans le sens de la flèche 24 en actionnant la poignée 31 dans le même sens, et permettre le retour de la poignée 31 dans le sens inverse de la flèche 24, la roue étant alors immobilisée par les premiers moyens d'encliquetage 16, 23. Un deuxième ressort de compression à boudin 33 est interposé entre la face supérieure du flasque de montage 30 et la face inférieure de l'aile supérieure 4 de la chape 2. Ce ressort 33 appuie le flasque de montage 30 contre la face supérieure de la roue 14.

En exerçant sur la poignée 31 une force dirigée vers le haut, à l'encontre de la force du ressort 33, il est possible de faire tourner la poignée 31 dans le sens de la flèche 24 sans agir sur la roue 14. Les deuxièmes crans 17 et le quatrième cran 32 constituent les deuxièmes moyens d'encliquetage du dispositif 1.

Comme on le voit clairement sur les dessins, la poignée 31 est articulée sur le flasque de montage 30, de telle manière qu'elle puisse pivoter autour d'un axe horizontal 35 perpendiculaire à l'axe de rotation 11, et prendre deux positions : une position de manoeuvre dans laquelle la poignée 31 est relevée dans le plan du flasque de montage 30 et une position rabattue, montrée en traits pleins sur le dessin, dans laquelle la poignée 31 est sensiblement parallèle à la tige 10 et est au voisinage de la périphérie de la roue 14.

Dans cette position rabattue, la poignée 31 peut être immobilisée sur la chape 2. A cet effet, la chape 2 comporte sur son aile inférieure 5, des encoches latérales 36, dont les contours sont montrés en pointillés sur la figure 4, et dans l'une desquelles, la poignée 31 peut s'introduire en position rabattue. Comme on le voit clairement sur cette figure 4, la plaque de blocage 26 présente un crochet 37 qui par rotation de la plaque de blocage 26 autour de la tige 10, vient bloquer la poignée 31 dans une encoche 36, l'encoche de gauche sur la figure 4. En inversant le sens de montage de la plaque de blocage 26, le crochet 37 coopérerait avec l'encoche 36 de droite de la figure 4.

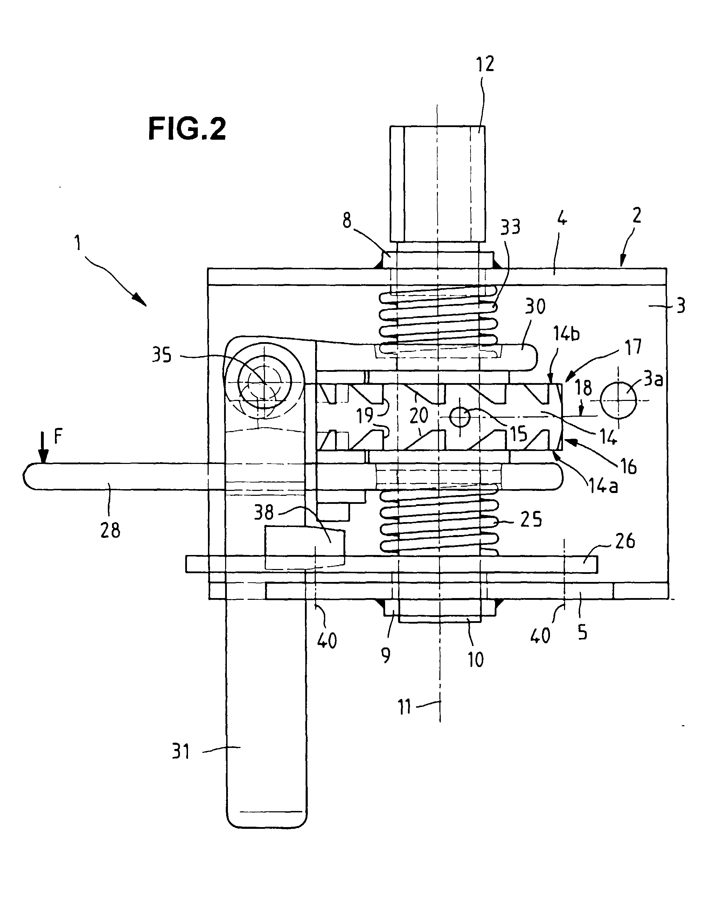

Comme on le voit clairement sur les figures 1 et 2, la poignée 31 présente sur sa face dirigée vers la roue 14, une patte 38 qui, dans la position rabattue de la poignée 31, se trouve au voisinage de la face inférieure de la pièce 22, afin de verrouiller les premiers moyens d'encliquetage et empêcher le déplacement vertical de la pièce 22, même si on exerce une force F sur le levier 28.

Comme cela est représenté sur le dessins, l'aile inférieure 5 de la chape 2 et la plaque de blocage 26 comportent des paires de trous 40 qui sont disposés en vis-à-vis, lorsque la plaque de blocage 26 est dans la position de blocage de la poignée 31. L'une des paires de trous permet l'utilisation d'un cadenas, afin de verrouiller le dispositif 10, et l'autre paire de trous peut être utilisée par les services de douane pour fixer un dispositif permettant de s'assurer de l'intégrité ou de l'inviolabilité du chargement du véhicule.

Le fonctionnement du dispositif se comprend aisément. Pour faire tourner la tige 10 dans le sens de la flèche 24, afin de tendre une bâche, par exemple, on bascule le crochet 37 de la plaque de blocage 26 dans le sens de la flèche 24, on relève la poignée 31 et on fait osciller la poignée de manoeuvre 31 alternativement dans le sens de la flèche 24 et dans le sens inverse, jusqu'à l'obtention de la tension désirée. A la fin de la manoeuvre, on rabat le poignée 31 dans l'encoche 36 et on bascule la plaque de blocage dans le sens inverse de la flèche 24.

Si on veut détendre la bâche, on bascule la plaque de blocage 21 dans le sens de la flèche 24, on relève la poignée 31. On soulève la poignée 31 pour que le quatrième cran 32 ne coopère plus avec les deuxièmes crans 17, et on peut ramener la poignée dans la position désirée. On appuie sur le levier 28 vers le bas pour déverrouiller les premiers moyens d'encliquetage. Si le déverrouillage ne s'effectue pas par suite d'une trop grande tension de la bâche sur son rouleau, on peut actionner légèrement la poignée 31 dans le sens de la flèche 24, puis laisser la poignée revenir vers sa position de départ en retenant la rotation de la roue 14 dans le sens inverse de la flèche 24.

Les formes des troisièmes crans 23 et quatrièmes crans 35 sont complémentaires des rainures séparant respectivement les premiers crans 16 et deuxièmes crans 17.

L'obliquité des flans inclinés 20, par rapport à l'axe 11, est calculée pour permettre à la pièce 22 et au flasque de montage 30 de désengrener de la roue 14, à l'encontre des forces des ressorts 25 et 33, dans un sens de rotation prédéterminé de la roue 14, ou de la poignée 31.

Dans la description précédente, la plaque de montage 30 ne présente pas de quatrième cran sur sa face supérieure. Mais on pourrait également le prévoir.

Dans ce cas, le flasque de montage 30, la roue 14, la pièce 22 et la plaque de blocage 26 pourraient être montées sens dessus dessous sur la tige 10. Le sens de rotation normale de la roue 14 serait alors inverse à celui représenté par la flèche 24. L'articulation de la poignée 31 sur la plaque de montage 30 serait étudiée pour permettre un montage normal de la poignée 31 sur la plaque de montage 30.

## Revendications

1. Dispositif d'enroulement, à commande manuelle, d'un élément enroulable, tel que par exemple câble, film, nappe, toile ou bâche, autour d'un arbre ou tambour, ledit dispositif comprenant :
une chape de montage (2),
une tige (10) montée à rotation dans ladite chape (2) et assujettie directement ou indirectement audit arbre ou tambour,
une roue (14) fixée coaxialement sur ladite tige (10),
une poignée de manoeuvre (31) montée oscillante sur ladite tige (10),
des premiers moyens d'encliquetage (16, 23) destinés à autoriser la rotation de la roue (14) dans un premier sens (24) et à la bloquer en rotation dans l'autre sens,
des seconds moyens d'encliquetage (17, 32), interposés entre la poignée de manoeuvre (31) et la roue (14), permettant le blocage de la poignée (31) par rapport à la roue (14), lorsqu'on fait pivoter la poignée (31) dans ledit premier sens (24) et permettant le pivotement libre de la poignée (31) dans l'autre sens, la roue (14) étant alors immobilisée en rotation par les premiers moyens d'encliquetage (16, 23),
caractérisé par le fait que
a) les premiers moyens d'encliquetage (16, 23) comportent des premiers crans (16) formés sur l'une (14a) des faces d'extrémité de la roue (14), et
b) les deuxièmes moyens d'encliquetage (17, 32) comportent des deuxièmes crans (17) formés sur l'autre face d'extrémité (14b) de la roue (14).

2. Dispositif selon la revendication 1, caractérisé par le fait que les premiers crans (16) et les deuxièmes crans (17) se présentent sous la forme de dentures radiales présentant chacune un premier flan (19) sensiblement parallèle à l'axe de rotation (11) de la roue (14), et un deuxième flan (20) incliné.

3. Dispositif selon l'une quelconque des revendications 1 et 2, caractérisé par le fait que les premiers moyens d'encliquetage (16, 23) comportent outre au moins un troisième cran (23) destiné à coopérer avec les premiers crans (17) et formé sur une face d'une pièce (22) montée coulissante sur la tige (14) et immobilisée en rotation par rapport à la chape (2), des premiers moyens élastiques (25) étant interposés entre la chape (2) et ladite pièce (22), afin de maintenir ladite pièce (22) en appui sur la face d'extrémité correspondante (14a) de la roue (14).

4. Dispositif selon la revendication 3, caractérisé par le fait que ladite pièce (22) comporte un levier (28) permettant de déverrouiller manuellement les premiers moyens d'encliquetage (16, 23) en exerçant sur ledit levier(28) une force opposée à la force des premiers moyens élastiques (25).

5. Dispositif selon l'une quelconque des revendications 1 à 4, caractérisé par le fait que les deuxièmes moyens d'encliquetage (17, 32) comportent en outre au moins un quatrième cran (32) destiné à coopérer avec les deuxièmes crans (17) et formé sur une face d'un flasque de montage (30) de la poignée de manoeuvre (31) sur la tige (10), ledit flasque (30) étant monté coulissant sur la tige (10), des deuxièmes moyens élastiques (33) étant interposés entre la chape (2) et ledit flasque (30), afin de maintenir ledit flasque (30) en appui sur la face d'extrémité (14b) correspondante de la roue (14).

6. Dispositif selon la revendication 5, caractérisé par le fait que la poignée de manoeuvre (31) est articulée sur le flasque de montage (30), de telle manière qu'elle puisse prendre une position rabattue sensiblement parallèle à la tige (14) et par le fait qu'il est prévu des moyens pour immobiliser la poignée (31) en position rabattue.

7. Dispositif selon la revendication 6, caractérisé par le fait que les moyens d'immobilisation de la poignée (31) en position rabattue comportent une encoche (36) de réception de poignée formée dans la chape (2) et une plaque de blocage (26) montée pivotante sur la tige (10) et comportant un crochet (37) susceptible de coopérer avec l'encoche (36) pour bloquer la poignée (31) dans ladite encoche (36).

8. Dispositif selon la revendication 7, caractérisé par le fait que la plaque de blocage (26) et la chape (2) comportent des trous (40) prévus en regard l'un de l'autre, lorsque ladite plaque (26) est dans la position de blocage de la poignée (31), lesdits trous (40) étant susceptibles de recevoir un élément de verrouillage dudit dispositif tel qu'un crochet de cadenas.

9. Dispositif selon l'une quelconque des revendications 6 à 8, caractérisé par le fait que la poignée de manoeuvre (31) se rabat du côté de la roue (14) et comporte une patte (38) permettant de verrouiller les premiers moyens d'encliquetage (16, 23), lorsque la poignée (31) est en position rabattue.

## Patentansprüche

1. Handbetriebene Vorrichtung zum Wickeln von Wickelgut, wie beispielsweise Kabel, Film, Tuch, Leinwand oder Planen auf einer Spindel oder Trommel, wobei die Vorrichtung aufweist:
einen Montagebügel (2),
eine Welle (10), die in dem Bügel (2) drehbar gelagert und direkt oder indirekt von der Spindel oder Trommel abhängig ist,
ein Rad (14), das koaxial an der Welle (10) befestigt ist,
einen Betätigungsgriff (31), der pendelnd an der Welle (10) gelagert ist,
erste Verrastungsmittel (16, 23), die dazu bestimmt sind, die Drehung des Rads (14) in einer ersten Richtung (24) zu erlauben und sie in der anderen Richtung zu hemmen,
zweite Verrastungsmittel (17, 32), die zwischen dem Betätigungsgriff (31) und dem Rad (14) angeordnet sind, das Hemmen des Griffs (31) bezüglich des Rads (14) ermöglichen, wenn man den Griff (31) in die erste Richtung (24) schwenkt, und die das freie Schwenken des Griffs (31) in die andere Richtung erlauben, wobei das Rad (14) durch die ersten Verrastungsmittel (16, 23) am Drehen gehindert ist,
dadurch gekennzeichnet, daß
a) die ersten Verrastungsmittel (16, 23) erste Rasten (16) umfassen, die an einer (14a) der Stirnflächen des Rads (14) ausgebildet sind, und
b) die zweiten Verrastungsmittel (17, 32) zweite Rasten (17) umfassen, die an der anderen Stirnfläche (14b) des Rads (14) ausgebildet sind.

2. Vorrichtung nach Anspruch 1, dadurch gekennzeichnet, daß die ersten Rasten (16) und die zweiten Rasten (17) die Form von radialen Zahnungen haben, die je eine zur Drehachse (11) des Rads (14) im wesentlichen parallele erste Fläche (19) und eine geneigte zweite Fläche (20) aufweisen.

3. Vorrichtung nach einem der Ansprücne 1 und 2, dadurch gekennzeichnet, daß die ersten Verrastungsmittel (16, 23) außerdem mindestens eine dritte Rast (23) haben, die dazu bestimmt ist, mit den ersten Rasten (17) zusammenzuwirken und auf einer Oberfläche eines Bauteils (22) ausgebildet sind, das verschiebbar an der Welle (14) angebracht ist und am Drehen bezüglich des Bügels (2) gehindert ist, wobei erste elastische Mittel (25) zwischen dem Bügel (2) und dem Bauteil (22) angeordnet sind, um das Bauteil (22) in Abstützung auf der entsprechenden Stirnfläche (14a) des Rads (14) zu halten.

4. Vorrichtung nach Anspruch 3, dadurch gekennzeichnet, daß das Bauteil (22) einen Hebel (28) umfaßt, der es erlaubt, die ersten Verrastungsmittel (16, 23) von Hand zu entriegeln, indem auf den Hebel (28) eine Kraft ausgeübt wird, die der Kraft der ersten elastischen Mittel (25) entgegengesetzt ist.

5. Vorrichtung nach einem der Ansprüche 1 bis 4, dadurch gekennzeichnet, daß die zweiten Verrastungsmittel (17, 32) außerdem mindestens eine vierte Rast (32) aufweisen, die dazu bestimmt ist, mit den zweiten Rasten (17) zusammenzuwirken und auf einer Oberfläche eines Montageflansches (30) des auf der Welle (10) angeordneten Betätigungsgriffs (31) ausgebildet ist, wobei der Flansch (30) verschiebbar an der Welle (10) angebracht ist und zweite elastische Mittel (33) zwischen dem Bügel (2) und dem Flansch (30) angeordnet sind, um den Flansch (30) in Abstützung auf der entsprechenden äußeren Oberfläche (14b) des Rads (14) zu halten.

6. Vorrichtung nach Anspruch 5, dadurch gekennzeichnet, daß der Betätigungsgriff (31) derart an dem Montageflansch (30) angelenkt ist, daß er eine umgeklappte Stellung im wesentlichen parallel zur Welle (14) einnehmen kann, und daß Mittel vorgesehen sind, um den Griff (31) in der umgeklappten Stellung festzuhalten.

7. Vorrichtung nach Anspruch 6, dadurch gekennzeichnet, daß die Mittel, um den Griff (31) in der umgeklappten Stellung festzuhalten, eine in dem Bügel (2) ausgebildete Aussparung (36) zum Aufnehmen des Griffs und eine Hemmplatte (26) umfassen, die schwenkbar an der Welle (10) angeordnet ist und einen Haken (37) umfaßt, der mit der Aussparung (36) zusammenwirken kann, um den Griff (31) in der Aussparung (36) zu blockieren.

8. Vorrichtung nach Anspruch 7, dadurch gekennzeichnet, daß die Hemmplatte (26) und der Bügel (2) Löcher (40) aufweisen, die, wenn die Platte (26) in der Stellung des Blockierens des Griffs (31) ist, einander gegenüberliegend angeordnet sind, wobei die Löcher (40) ein Element zum Verriegeln der Vorrichtung wie beispielsweise einen Bügel eines Vorhängeschlosses aufnehmen können.

9. Vorrichtung nach einem der Ansprüche 6 bis 8, dadurch gekennzeichnet, daß der Betätigungsgriff (31) auf der Seite des Rads (14) umgeklappt ist und einen Fuß (38) aufweist, der es erlaubt, die ersten Verrastungsmittel (16, 23) zu verriegeln, wenn der Griff (31) in der umgeklappten Stellung ist.

## Claims

1. Winding device, with manual control, for a member, such as cable, film, sheet, cloth or tarpaulin, able to be wound around a shaft or drum, said device comprising:
a retaining plate (2) for mounting,
a rod (10) mounted so as to rotate in said retaining plate (2) and directly or indirectly secured to said shaft or drum,
a wheel (14) fixed coaxially on said rod (10),
a manoeuvring handle (31) mounted so as to oscillate on said rod (10),
first ratchet means (16, 23) intended to allow rotation of the wheel (14) in a first direction (24) and to lock it in rotation in the other direction,
second ratchet means (17, 32), interposed between the manoeuvring handle (31) and the wheel (14), allowing locking of the handle (31) with respect to the wheel (14), when the handle (31) is caused to pivot in said first direction (24) and allowing free pivoting of the handle (31) in the other direction, the wheel (14) then being immobilised in rotation by the first ratchet means (16, 23),
characterised in that
a) the first ratchet means (16, 23) comprise first notches (16) formed on one (14a) of the end faces of the wheel (14), and
b) the second ratchet means (17, 32) comprise second notches (17) formed on the other end face (14b) of the wheel (14).

2. Device according to Claim 1, characterised in that the first notches (16) and the second notches (17) take the form of sets of radial toothing each having a first blank (19) substantially parallel to the axis of rotation (11) of the wheel (14), and a second, inclined blank (20).

3. Device according to either one of Claims 1 and 2, characterised in that the first ratchet means (16, 23) further comprise at least one third notch (23) intended to co-operate with the first notches (17) and formed on one face of a part (22) mounted so as to slide on the rod (14) and immobilised in rotation with respect to the retaining plate (2), first resilient means (25) being interposed between the retaining plate (2) and said part (22), in order to keep said part (22) bearing against the corresponding end face (14a) of the wheel (14).

4. Device according to Claim 3, characterised in that said part (22) comprises a lever (28) making it possible to manually unlock the first ratchet means (16, 23) by exerting on said lever (28) a force opposing the force of the first resilient means (25).

5. Device according to any one of Claims 1 to 4, characterised in that the second ratchet means (17, 32) further comprise at least one fourth notch (32) intended to co-operate with the second notches (17) and formed on one face of a mounting flange (30) of the manoeuvring handle (31) on the rod (10), said flange (30) being mounted so as to slide on the rod (10), second resilient means (33) being interposed between the retaining plate (2) and said flange (30), in order to keep said flange (30) bearing against the corresponding end face (14b) of the wheel (14).

6. Device according to Claim 5, characterised in that the manoeuvring handle (31) is articulated on the mounting flange (30), in such a way that it can take a folded position substantially parallel to the rod (14) and in that means are provided for immobilising the handle (31) in the folded position.

7. Device according to Claim 6, characterised in that the means for immobilising the handle (31) in the folded position comprise a recess (36) for receiving the handle formed in the retaining plate (2) and a locking plate (26) mounted so as to pivot on the rod (10) and comprising a hook (37) capable of co-operating with the recess (36) so as to lock the handle (31) in said recess (36).

8. Device according to Claim 7, characterised in that the locking plate (26) and the retaining plate (2) comprise holes (40) provided facing one another, when said plate (26) is in the locking position of the handle (31), said holes (40) being capable of receiving a locking member for said device such as a padlock hook.

9. Device according to any one of Claims 6 to 8, characterised in that the manoeuvring handle (31) folds back on the side of the wheel (14) and comprises a tab (38) making it possible to lock the first ratchet means (16, 23), when the handle (31) is in the folded position.
